# EUROPÄISCHE PATENTANMELDUNG

(11) **EP 1 452 578 A1**
(43) Veröffentlichungstag der Anmeldung: **01.09.2004**
(21) Anmeldenummer: 03004351.7
(22) Anmeldetag: 28.02.2003
(51) Int. Cl.: C10K 3/00, C01B 21/068

(54) **Verfahren zur Reduzierung des Stickstoffgehaltes in Brenngasen**

(71) Anmelder: von Görtz & Finger Techn. Entwicklungs Ges.m.b.H., 36110 Schlitz (DE)
(72) Erfinder: Finger, Ulrich, 7647 Oberthingau (DE); von Görtz, Rüdiger, Graf, 36110 Schlitz (DE)

(57) **Zusammenfassung**

Die Erfindung umfasst ein Verfahren, zur Reduzierung des Stickstoffgehaltes in einem Brenngas. Durch die Verwendung von Siliciumpulver als Zusatz, wird dieses Siliciumpulver mit Stickstoff verbrannt. Als Nebenprodukt wird bei dieser Verbrennung Siliciumnitrid erzeugt. Externe Prozesswärme wird bei der Verbrennung auch erzeugt.

## Beschreibung

Bei der Vergasung von Holz oder ähnlicher Biomasse entsteht je nach Holzart und Feuchte eine Gaszusammensetzung die besteht im folgenden aus ca. 20% Wasserstoff H₂, ca. 20% Kohlenmonoxid CO und ca. 2% - 4% Methan CH₄. Diese drei Gase sind brennbar und können für die Energieerzeugung genutzt werden. Aus der Verbrennung eines Teiles der Biomasse die für die Prozesswärmeerzeugung benötigt wird, sind im Gas 7% - 8% Kohlendioxid CO₂ enthalten. Der restliche Anteil im Brenngas besteht aus ca. 50% Stickstoff N₂.

Die Vergaserluft besteht aus 21% Sauerstoff, 78% Stickstoff und ca. 1 % andere Gase. Bei der Erzeugung der Prozesswärme im Vergaser wird nur der Sauerstoff für die Verbrennung verwertet so dass die 78% Stickstoff als Ballast übrig bleiben. Hieraus ergibt sich auch der hohe Anteil von 50% Stickstoff im Brenngas, dass bei der Vergasung erzeugt wird.

Um diesen Stickstoffanteil zu reduzieren und gleichzeitig Prozesswärme zu erzeugen, wurde ein Verfahren entwickelt bei dem Siliciumpulver mit Stickstoff verbrannt wird.

Die Erfindung des Verfahrens beruht darauf, dass zuerst die 21% Sauerstoff aus der Luft mit dem Kohlenstoff der in Form von Holzkohle im Vergaser vorhanden ist verbrennen. Erst danach wird erwärmtes Siliciumpulver dem Prozess zugeführt, so dass das Siliciumpulver mit dem heissen Stickstoffgas verbrennt.

Bei der Verbrennung von Siliciumpulver mit Stickstoff wird Siliciumnitrid Si₃N₄ erzeugt.

Da jegliches Holz oder Biomasse, das vergast wird vorher eine gewisse Feuchtigkeit enthält, muss diese Feuchtigkeit erst durch Wärmeeinwirkung verdampft werden. Dieser Dampf besteht aus H₂ O und wird im Laufe der Vergasung ab Temperaturen von 750° Celsius in die Gase Wasserstoff H₂ und Sauerstoff O₂ aufgespaltet. Der Sauerstoff verbindet sich mit dem Kohlenstoff zu Kohlenmomoxid CO und der Wasserstoff H₂ bleibt als Brenngas bestehen. Diese Aufspaltung des Wasserdampfes findet im ersten Drittel des Vergasungsprozesses statt. Wenn nun ein Teil des Wasserdampfes mit dem erzeugten Siliciumnitrid in Verbindung kommt, entsteht zum einen Ammoniak und zum anderen eine zusätzlich externe Wärme, die als Prozesswärme genutzt werden kann. Das Ammoniakgas wäre der vierte Volumenanteil an dem Brenngas und würde den Heizwert des Gases wesentlich verbessern. Ein weiterer Vorteil ergebe sich daraus, dass Ammoniak bei der Verbrennung im Motor sich mit dem entstehenden CO₂ zu Harnstoff verbindet. Harnstoff verhindert bei der Verbrennung die Entstehung von NOₓ, wodurch die Abgase des Motors wesentlich verbessert werden.

Vorteile bei der Vergasung von Biomasse mit einem dosierten Zusatz von Siliciumpulver wären folgende:
1) Der Stickstoffgehalt im Brenngas würde von 50% Volumenanteil, auf ein Minimum reduziert werden.
2) Durch die Verbrennung von Siliciumpulver mit Stickstoff, wird zusätzliche Prozesswärme erzeugt.
3) Durch Beimischung des bereits vorhandenen Wasserdampfes zum aus der Siliciumverbrennung entstandenen Siliciumnitrid, entsteht Ammoniak und damit ein zusätzliches brennbares Gas.
4) Bei der Verbindung von Siliciumnitrid mit Ammoniak, wird zusätzliche Prozesswärme erzeugt.
5) Durch den Ammoniakanteil im Brenngas entsteht im Verbrennungsmotor durch die Verbindung mit CO₂ Harnstoff, der den NOₓ-Gehalt im Abgas reduziert.
6) Das bei der Verbrennung von Siliciumpulver mit Stickstoff erzeugte Siliciumnitrid wird mit der Asche aus der Vergasung ausgetragen. Das Siliciumnitrid kann von der Asche getrennt werden und erzeugt durch den Verkauf einen zusätzlich wirtschaftlichen Gewinn. Für dieses Siliciumnitrid werden zur Zeit auf dem Weltmarkt hohe Preise gezahlt.
7) Ein weiterer Vorteil ergibt sich daraus, dass die Prozesswärme, die durch die Verbrennung von Siliciumpulver und Stickstoff entsteht es ermöglicht, auch nicht brennbare Biomasse, wie zum Beispiel Klärschlamm, zu vergasen.

Es besteht auch die Möglichkeit, dem zu vergasendem Material in genau bemessenen Dosierungen Siliciumpulver beizumischen.

Bei diesem Verfahren verbrennen die 21% Sauerstoff in der Luft zuerst mit dem Siliciumpulver zu Quarzsand SiO₂, der mit der Asche ausgetragen wird.

Hierbei wird sehr viel Prozesswärme erzeugt, die für den Vergasungsprozess verbraucht wird.

Erst danach verbrennt das Siliciumpulver mit dem 78% Stickstoffanteil um den Heizwert des Brenngases zu verbessern.

Auch bei diesem Verfahren wird durch die Verbrennung von Siliciumpulver und Stickstoff ein Siliciumnitrid erzeugt.

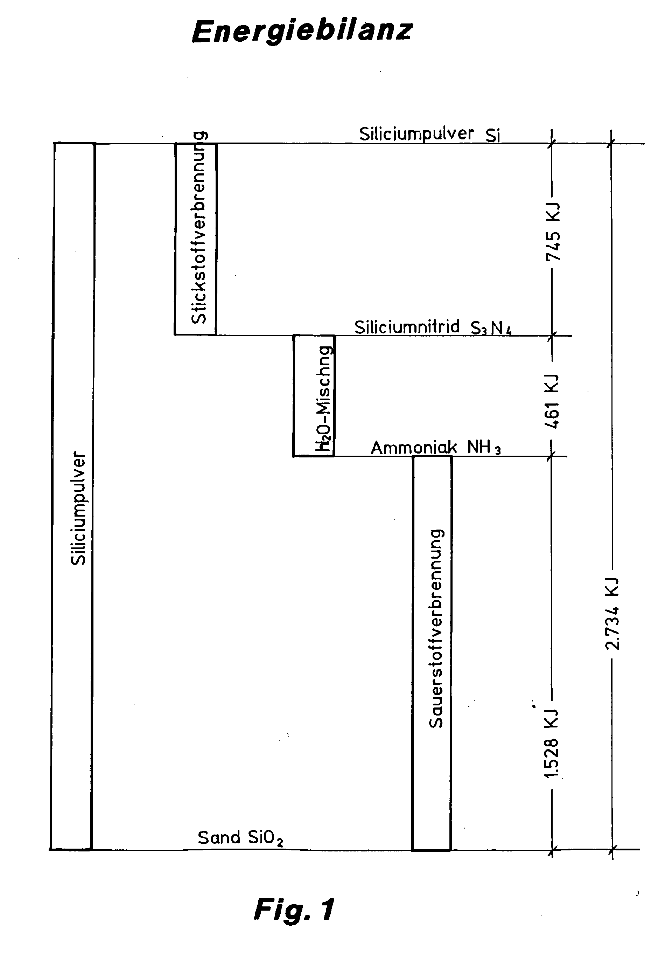

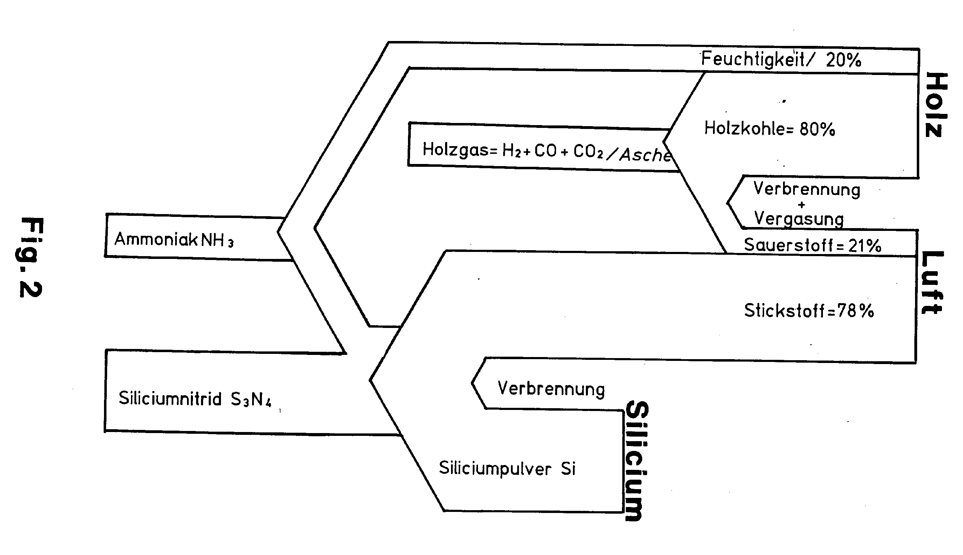

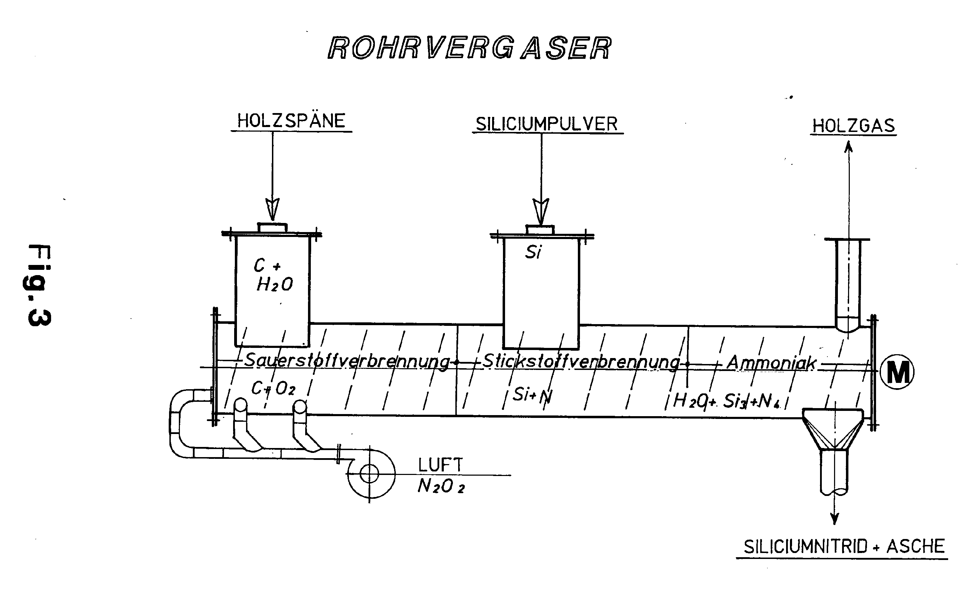

## Patentansprüche

1. Verfahren zur Reduzierung des Stickstoffgehaltes in Brenngasen **dadurch gekennzeichnet, dass** durch Beimischung von Siliciumpulver der Stickstoff im Gas verbrannt wird.

2. Verfahren nach Anspruch 1 **dadurch gekennzeichnet, dass** durch die Verbrennung von Siliciumpulver und Stickstoff Prozesswärme erzeugt wird.

3. Verfahren nach Anspruch 2 **dadurch gekennzeichnet, dass** durch die Verbindung des bei der Trocknung entstandenen Wasserdampfes und dem aus der Stickstoffverbrennung entstandenen Siliciumnitrid Ammoniak entsteht.

4. Verfahren nach Anspruch 3 **dadurch gekennzeichnet, dass** durch den Ammoniak ein weiteres brennbares Gas im Gasgemisch entsteht.

5. Verfahren nach Anspruch 4 **dadurch gekennzeichnet, dass** durch die Verbindung von Wasserdampf und Siliciumnitrid zusätzliche Prozesswärme entsteht.

6. Verfahren nach Anspruch 5 **dadurch gekennzeichnet, dass** das aus der Verbrennung von Siliciumpulver und Stickstoff entstandene Siliciumnitrid von der Asche getrennt wird und als hochwertiges verkauft werden kann.

7. Verfahren nach Anspruch 6 **dadurch gekennzeichnet, dass** durch die Prozesswärme, die bei der Verbrennng von Siliciumpulver und Stickstoff entsteht, auch andere nicht brennbare Stoffe (z.B. Klärschlammgranulat) vergast werden können.
